# EUROPÄISCHE PATENTSCHRIFT

(11) **EP 1 394 190 B1**
(45) Veröffentlichungstag und Bekanntmachung des Hinweises auf die Patenterteilung: **03.01.2007**
(21) Anmeldenummer: 03016465.1
(22) Anmeldetag: 22.07.2003
(51) Int. Cl.: C08G 61/12, B01J 31/06

(54) **Metathesekatalysatoren**
Metathesis catalysts
Catalyseurs de metathèse

(30) Priorität: 31.07.2002 DE 10234810
(43) Veröffentlichungstag der Anmeldung: 03.03.2004
(73) Patentinhaber: Saltigo GmbH, 51369 Leverkusen (DE)
(72) Erfinder: Blechert, Siegfried, Prof. Dr., 13503 Berlin (DE); Connon, S., Dr., The Donarhies, Dublin 13 (IE)
(74) Vertreter: Wichmann, Birgid

(56) Entgegenhaltungen:
- EP-A- 0 400 903
- DE-A- 3 226 865
- GB-A- 2 238 791
- US-A- 4 839 322
- US-A- 4 883 851
- DATABASE WPI Section Ch, Week 198708 Derwent Publications Ltd., London, GB; Class A26, AN 1987-054598 XP002265197 & JP 62 011720 A (MITSUI TOATSU CHEM INC) 20. Januar 1987 (1987-01-20)

## Beschreibung

Die Erfindung betrifft polymere Übergangsmetallkatalysatoren, Verfahren zu deren Herstellung, Zwischenprodukte sowie die Verwendung der Übergangsmetallkatalysatoren als Katalysatoren in organischen Reaktionen, insbesondere in Olefin-Metathesereaktionen.

Olefin-Metathesereaktionen wie zum Beispiel die Ringschluss-Metathese (RCM), Kreuzmetathese (CM) und Ring-öffnende Metathese-Polymerisationen (ROMP) sind wichtige Synthesemethoden zur Knüpfung von C-C-Bindungen.

Für Olefin-Metathesereaktionen sind eine Vielzahl von Katalysatorsystemen entwickelt worden, die zusammenfassend beispielsweise beschrieben sind in T. M. Trnka, R. H. Grubbs, *Acc. Chem. Res.* **2001**, *34*, 18-29.

Dabei haben sich im Hinblick auf Aktivität insbesondere solche Katalysatorsysteme als geeignet erwiesen, die Alkoxybenzyliden-Komplexe von Übergangsmetallen enthalten. Jedoch gewinnt auch zunehmend die Abtrennung der Katalysatoren und gegebenenfalls deren erneuter Einsatz an Bedeutung, da Katalysatormetallrückstände im Produkt deren Qualität erheblich beeinträchtigen können.

So sind zum Beispiel aus Veldhuizen et al., *J. Am. Chem. Soc.* **2002,** *124,* 4954-4955 Phosphan-Alkoxybenzyliden-Komplexe des Rutheniums bekannt, die sich als wiederverwendbare Katalysatoren für die Kreuz-Metathese von tricyclischen Norbornenen eignen. Diese Beschränkung auf spezielle Substrate ist für den technischen Einsatz jedoch hinderlich.

Weiterhin sind in Gessler et al., *Tetrahedron Lett. 41,* **2000,** 9973-9976 stabile Rutheniumkomplexe beschrieben, die Dihydroimidazol-2-yliden- und Isopropoxybenzyliden-Liganden enthalten. Die schwierige Rückgewinnung des Katalysators ist jedoch für industrielle Applikationen nicht zufriedenstellend.

In der WO 02/14376 A2 werden dendrimere Rutheniumkomplexe mit Dihydroimidazol-2-yliden- und Isopropoxybenzyliden-Liganden beschrieben, die sich aus den Katalysereaktionsmischungen, die bei Olefin-Metathesereaktionen entstehen, in vorteilhafter Weise von den Reaktionsprodukten abtrennen lassen sollen. Nachteilig an diesen Katalysatoren ist jedoch die aufwändige Synthese des dendritischen Gerüsts und dass sie in unterschiedlichen Medien aufquellen können, was ungünstig für die katalytische Aktivität ist.

Es bestand demnach weiterhin Bedarf an einfach zugänglichen Katalysatoren, die eine hohe Aktivität auch bei Wiederverwendung aufweisen und aus den Katalysereaktionsmischungen in einfacher Weise abzutrennen sind.

Überraschenderweise wurden nun polymere Verbindungen gefunden, enthaltend zumindest
- Struktureinheiten der Formel (Ia), 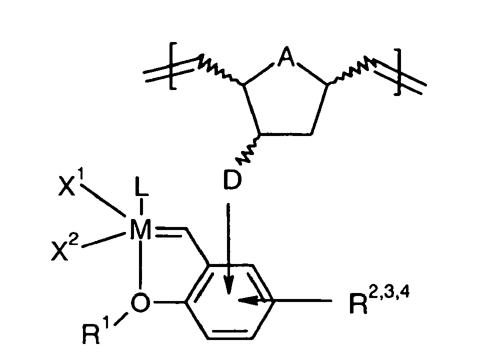 worin
   - M: für ein Übergangsmetall der 8. Nebengruppe des Periodensystems steht,
   - X¹ und X²: gleich oder verschieden sind und für Chlor, Brom oder Iod stehen,
   - L: für einen N-heterocyclischen Carbenliganden der Formel (II) steht 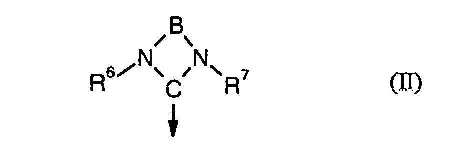 wobei die Pfeilrichtung die Bindung zu M symbolisieren soll und in der
   B für einen 1,2-Ethandiyl- oder 1,2-Ethendiyl-Rest steht, der gegebenenfalls einfach oder zweifach durch C₁-C₄-Alkyl, C₆-C₁₅-Arylalkyl oder C₅-C₁₄-Aryl weiter substituiert ist und
   - R⁶ und R⁷: jeweils unabhängig voneinander für C₁-C₂₀-Alkyl oder C₅-C₂₄-Aryl stehen,
   - R¹: für cyclisches, geradkettiges oder verzweigtes C₁-C₂₀-Alkyl oder für C₅-C₂₄-Aryl steht und
   - R², R³ und R⁴: jeweils unabhängig voneinander für Wasserstoff, C₁-C₂₀-Alkyl, C₅-C₂₄-Aryl, Halogen, C₁-C₄-Fluoralkyl, C₁-C₄-Alkoxy, C₅-C₁₄-Aryloxy, (C₁-C₈-Alkyl)OCO-, (C₁-C₈-Alkyl)CO₂-,(C₅-C₁₄-Aryl)OCO- oder (C₅-C₁₄-Aryl)CO₂- stehen und/oder
   jeweils zwei zueinander ortho-ständige Reste aus der Gruppe R², R³ und R⁴ Teil eines cyclischen Systems sind, der aus einem Kohlenstoffgerüst mit 5 bis 22 Kohlenstoffatomen besteht, wobei ein oder mehrere Kohlenstoffatome cyclischen Systems durch Heteroatome aus der Gruppe Schwefel, Sauerstoff oder Stickstoff ersetzt sein können und wobei das cyclische System weiterhin gegebenenfalls einfach oder mehrfach durch Reste substituiert ist, die ausgewählt sind aus der Gruppe Halogen, C₁-C₄-Fluoralkyl, (C₁-C₄-Alkyl)OCO-, (C₁-C₈-Alkyl)CO₂-, (C₆-C₁₀-Aryl)OCO- oder (C₅-C₁₄-Aryl)CO₂- und
   - A: für Sauerstoff, Schwefel, Sulfoxyl, Sulfonyl oder CR⁸R⁹ steht, wobei R⁸ und R⁹ jeweils unabhängig voneinander für Wasserstoff oder C₁-C₄-Alkyl stehen und
   - D: für C₁-C₈-Alkylen, [(C₁-C₈-Alkylen)-O-]ₙ mit n = 1 bis 12, (C₁-C₈-Alkylen)CO₂-, (C₁-C₈-Alkylen)-OCO-(C₁-C₈-Alkylen), (C₁-C₈-Alkylen)CO₂-(C₁-C₈-Alkylen), (C₁-C₈-Alkylen)CONR¹⁰-, (C₁-C₈-Alkylen)NR¹⁰CO-, (C₁-C₈-Alkylen)CONR¹⁰-(C₁-C₈-Alkylen) oder (C₁-C₈-Alkylen)NR¹⁰CO-(C₁-C₈-Alkylen) steht, wobei R¹⁰ für Wasserstoff oder C₁-C₄-Alkyl steht
- und Struktureinheiten der Formel (Ib) 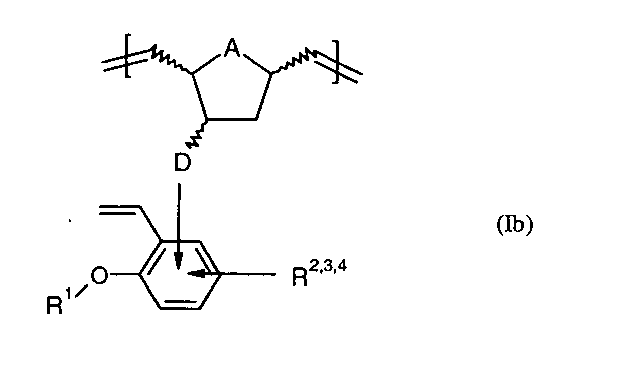 wobei A, D, R¹, R², R³ und R⁴ jeweils unabhängig die gleichen Bedeutungen besitzen und die gleichen Bedingungen erfüllen, die unter der Formel (Ia) genannt wurden und
- gegebenenfalls Struktureinheiten der Formel (Ic) 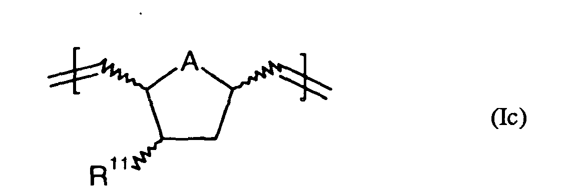 in der
   - A: die gleichen Bedeutung besitzt und die gleichen Bedingungen erfüllt, die unter der Formel (Ia) genannt wurden und
   - R¹¹: für C₁-C₈-Alkyl, [(C₁-C₈-Alkylen)-O-]ₙ-(C₁-C₈-Alkyl) mit n = 1 bis 12, (C₁-C₈-Alkylen)CO₂-(C₁-C₈-Alkyl), (C₁-C₈-Alkylen)-OCO-(C₁-C₈-Alkyl), (C₁-C₈-Alkylen)-OCO-(C₅-C₁₄-Aryl), (C₁-C₈-Alkylen)CO₂-(C₅-C₁₄-Aryl), (C₁-C₈-Alkylen)CONR¹⁰-(C₁-C₈-Alkyl), (C₁-C₈-Alkylen)NR¹⁰CO-(C₁-C₈-Alkyl), (C₁-C₈-Alkylen)-CONR¹⁰-(C₅-C₁₄-Aryl) oder (C₁-C₈-Alkylen)NR¹⁰CO-(C₅-C₁₄-Aryl) steht, wobei R¹⁰ für Wasserstoff oder C₁-C₄-Alkyl steht,
wobei der Polymerisationsgrad (Zahlenmittel) der Struktureinheiten der formeln (Ia), (Ib) und gegebenenfalls (Ic) 6 bis 2000, bevorzugt 10 bis 500 beträgt.

Im Rahmen der Erfindung können alle aufgeführten, allgemeinen oder in Vorzugsbereichen aufgeführten Restedefinitionen bzw. Erläuterungen untereinander, also auch zwischen den jeweiligen Bereichen und Vorzugsbereichen beliebig kombiniert werden.

Geschlängelte Linien in Formelzeichnungen sollen hervorheben, dass jeweils beide möglichen Isomeren von der Darstellung umfasst sein sollen.

Alkyl bzw. Alkylen bzw. Alkoxy bedeutet im Rahmen der Erfindung jeweils unabhängig einen geradkettigen, cyclischen, verzweigten oder unverzweigten Alkyl- bzw. Alkylen- bzw. Alkoxy-Rest, der gegebenenfalls durch C₁-C₄-Alkoxy-Reste weiter substituiert sein kann. Gleiches gilt für den Alkylenteil eines Arylalkyl-Restes.

Beispielsweise steht in allen Zusammenhängen bevorzugt C₁-C₄-Alkyl für Methyl, Ethyl, n-Propyl, Isopropyl, n-Butyl und tert.-Butyl, C₁-C₈-Alkyl darüber hinaus für Neopentyl, n-Pentyl, Cyclohexyl, n-Hexyl, n-Heptyl, n-Octyl und iso-Octyl, C₁-C₂₀-Alkyl, weiter darüber hinaus z.B. für n-Decyl, n-Dodecyl, n-Hexadecyl und n-Octadecyl.

Beispielsweise steht C₁-C₄-Alkylen in allen Zusammenhängen bevorzugt für Methylen, 1,1-Ethylen, 1,2-Ethylen, 1,1-Propylen, 1,2-Propylen, 1,3-Propylen, 1,1-Butylen, 1,2-Butylen, 2,3-Butylen und 1,4-Butylen, C₁-C₈-Alkylen darüber hinaus für 1,5-Pentylen, 1,6-Hexylen, 1,1-Cyclohexylen, 1,4-Cyclohexylen, 1,2-Cyclohexylen und 1,8-Octylen.

Aryl steht im Rahmen der Erfindung für carbocyclische Reste und heteroaromatische Reste in denen keines, ein, zwei oder drei Gerüstatome pro Cyclus, im gesamten Rest mindestens jedoch ein Gerüstatom Heteroatome sind, die ausgewählt sind aus der Gruppe Stickstoff, Schwefel oder Sauerstoff. Weiterhin können die carbocyclischen aromatischen Reste oder heteroaromatische Reste mit bis zu fünf gleichen oder verschiedenen Substituenten pro Cyclus substituiert sein, beispielsweise ausgewählt aus der Gruppe Hydroxy, Chlor, Fluor, Nitro und C₁-C₁₂-Alkyl. Aryl steht im Rahmen der Erfindung vorzugsweise für vorstehend definierte carbocyclische Reste.

Gleiches gilt für den Arylteil eines Arylalkyl-Restes. C₆-C₁₅-Arylalkyl steht beispielsweise und bevorzugt für Benzyl.

Fluoralkyl steht im Rahmen der Erfindung jeweils unabhängig einen geradkettigen, cyclischen, verzweigten oder unverzweigten Alkylrest, der mit einem, mehreren oder vollständig mit Fluoratomen substituiert sein können.

Beispielsweise und bevorzugt steht C₁-C₄-Fluoralkyl, in allen Zusammenhängen bevorzugt für Trifluormethyl, 2,2,2-Trifluorethyl, Pentafluorethyl und Nonafluorbutyl.

Die polymeren Verbindungen enthaltend zumindest die Struktureinheiten der Formel (Ia) und (Ib) und gegebenenfalls (Ic) können weiterhin Struktureinheiten enthalten, die sich von Olefinen ableiten, die für Ring-öffnende Metathese-Polymerisation geeignet sind. Diese sind aus der Literatur (z.B. aus T. M. Trnka, R. H. Grubbs, *Acc. Chem. Res.* **2001**, *34,* 18-29 und der dort zitierten Literatur) hinlänglich bekannt.

Es sei darauf hingewiesen, dass vom Rahmen der Erfindung auch polymere Verbindungen umfasst sind, in denen die Struktureinheiten der Formel (Ia) und/oder der Formel (Ib) und/oder gegebenenfalls die Struktureinheiten der Formel (Ic) jeweils unterschiedliche Bedeutungen für A und D bzw. M, L, X¹, X² bzw. R¹, R², R³, R⁴ bzw. R¹¹ aufweisen können, bevorzugt sind jedoch solche polymeren Verbindungen, in denen in den Struktureinheiten der Formel (Ia) M, L, X¹ und X² ebenso wie R¹, R², R³ und R⁴ in den Struktureinheiten der Formel (Ia) und (Ib) und R¹¹ in den gegebenenfalls vorhandenen Struktureinheiten der Formel (Ic) ebenso wie A und D in den Struktureinheiten der Formel (Ia) und (Ib) und den gegebenenfalls vorhandenen Struktureinheiten der Formel (Ic) jeweils identisch sind.

Weiterhin sind solche polymeren Verbindungen bevorzugt, in denen der Anteil an den Struktureinheiten der Formel (Ia) und der Formel (Ib) und den gegebenenfalls vorhandenen Struktureinheiten der Formel (Ic) (durchschnittlicher Gewichtsanteil) 80 % oder mehr, bevorzugt 90 % oder mehr und besonders bevorzugt 98 % oder mehr beträgt.

Bevorzugt beträgt das Verhältnis von Struktureinheiten der Formel (Ia) zu Struktureinheiten der Formel (Ib) im Polymer 1:2 bis 1:500, besonders bevorzugt 1:8 bis 1:200.

Enthält die polymere Verbindung weiterhin Struktureinheiten der Formel (Ic) so beträgt darüber hinaus das Verhältnis von Struktureinheiten der Formel (Ia) zu Struktureinheiten der Formel (Ic) bevorzugt 10:1 bis 1:200, besonders bevorzugt 1:1 bis 1:100 und ganz besonders bevorzugt 1:10 bis 1:50.

Vorzugsweise ist in den Struktureinheiten (Ia) und (Ib) D über die ortho-Stellung zum Olefin bzw. der Ylideneinheit gebunden.
- M: steht in Formel (Ia) bevorzugt für Ruthenium oder Osmium, besonders bevorzugt für Ruthenium.
- X¹ und X²: stehen bevorzugt identisch für Chlor oder Brom, besonders bevorzugt für Chlor.

L steht in Formel (Ia) für einen N-heterocyclischen Carbenliganden der Formel (II).

In Formel (II) steht B bevorzugt für 1,2-Ethandiyl- oder 1,2-Ethendiyl.

In Formel (II) stehen R⁶ und R⁷ vorzugsweise und jeweils unabhängig voneinander bevorzugt jedoch identisch für einen primären C₅-C₂₀-Alkyl-Rest, wobei die Auflage gilt dass das an das Stickstoffatom gebundene Kohlenstoffatom einen tertiären Alkylrest trägt, oder für einen sekundären C₃-C₂₀-Alkyl-Rest, einen tertiären C₄-C₂₀-Alkyl-Rest oder für einen Phenylrest, der einfach oder mehrfach zumindest jedoch in einer ortho-Position durch C₁-C₄-Alkylreste weiter substituiert ist.

Besonders bevorzugt stehen in der Formel (III) R⁶ und R⁷ identisch für Isopropyl, sec.-Butyl, tert.-Butyl, 1-Methylbutyl, 1-Ethylpropyl, 1,1-Dimethylpropyl, 1,2-Dimethylpropyl, 1-Methylpentyl, 1,1-Dimethylbutyl, 1,2-Dimethylbutyl, 1,3-Dimethylbutyl, 1-Ethylbutyl, 1,1,2-Trimethylpropyl, 1,2,2-Trimethylpropyl, 1-Ethyl-1-methylpropyl, Cyclopentyl, Cyclohexyl, Cycloheptyl, Neopentyl, Adamantyl, Norbornyl, o-Tolyl, 2,6-Dimethylphenyl, 2-Ethyl-6-methylphenyl, 2,6-Diisopropylphenyl, o-Anisyl, 2,6-Dimethoxyphenyl, Mesityl und Isityl.
- R¹: steht bevorzugt für einen Rest der ausgewählt ist aus der Gruppe Ethyl, iso-Propyl, tert.-Butyl, neo-Pentyl, Cyclohexyl oder Cyclopentyl, wobei iso-Propyl noch weiter bevorzugt ist.
- R², R³ und R⁴: stehen bevorzugt jeweils unabhängig voneinander für Wasserstoff, C₁-C₄-Alkyl, Fluor, Chlor oder C₁-C₄-Fluoralkyl, besonders bevorzugt jeweils identisch für Wasserstoff.
- A: steht bevorzugt für Sauerstoff oder CH₂, wobei Sauerstoff noch weiter bevorzugt ist.
- D: steht bevorzugt für [(C₁-C₄-Alkylen)-O-]ₙ mit n = 1 oder 2, (C₁-C₄-Alkylen)CO₂-, besonders bevorzugt für (C₁-C₄-Alkylen)-O- und ganz besonders bevorzugt für CH₂O.
- R¹¹: steht bevorzugt für (C₁-C₄-Alkylen)-O-]ₙ-(C₁-C₄-Alkyl) mit n = 1 oder 2, (C₁-C₄-Alkylen)CO₂-(C₁-C₄-Alkyl) oder (C₁-C₄-Alkylen)CO₂-(C₅-C₁₄-Aryl), besonders bevorzugt für CH₂O₂C-(C₁-C₄-Alkyl) oder CH₂OCO-(C₅-C₁₄-Aryl) und ganz besonders bevorzugt für CH₂OCOPhenyl oder CH₂OCO(o-Methylaminophenyl), das als Fluorezenzmarker verwendet werden kann.

Ganz besonders bevorzugt enthalten die erfindungsgemäßen polymeren Verbindungen als Struktureinheiten der Formel (Ia): 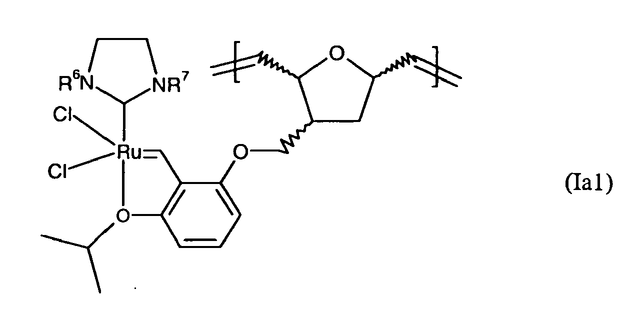 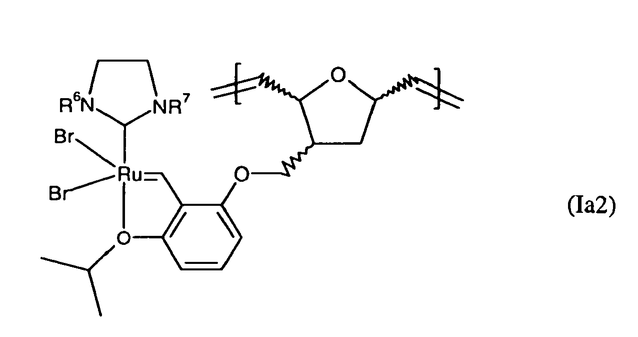 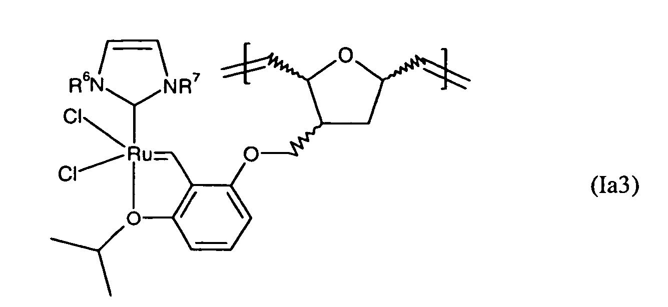 oder 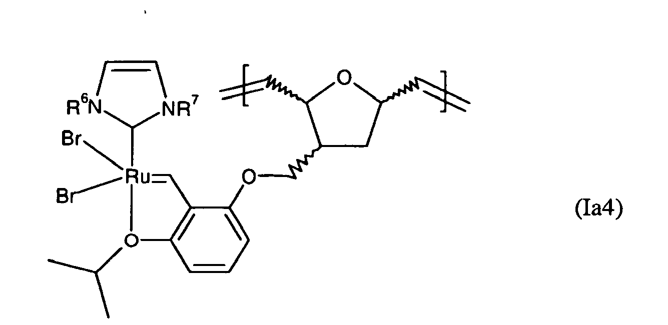 wobei R⁶ und R⁷ jeweils identisch für Isopropyl, sec.-Butyl, tert.-Butyl, 1-Methylbutyl, 1-Ethylpropyl, 1,1-Dimethylpropyl, 1,2-Dimethylpropyl, 1-Methylpentyl, 1,1-Dimethylbutyl, 1,2-Dimethylbutyl, 1,3-Dimethylbutyl, 1-Ethylbutyl, 1,1,2-Trimethylpropyl, 1,2,2-Trimethylpropyl, 1-Ethyl-1-methylpropyl, Cyclopentyl-, Cyclohexyl-, Cycloheptyl-, Neopentyl, Adamantyl, Norbornyl, o-Tolyl, 2,6-Dimethylphenyl, 2-Ethyl-6-methylphenyl, 2,6-Diisopropylphenyl, 2,6-Dimethoxyphenyl und Mesityl stehen.

Ganz besonders bevorzugt enthalten die erfindungsgemäßen polymeren Verbindungen als Struktureinheiten der Formel (Ib):

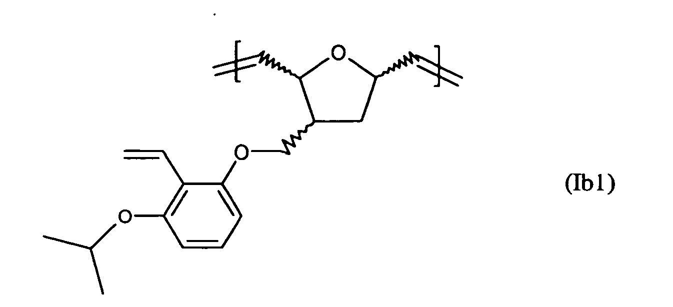

Enthalten die erfindungsgemäßen polymeren Verbindungen Struktureinheiten der Formel (Ic) so ist folgende ganz besonders bevorzugt:

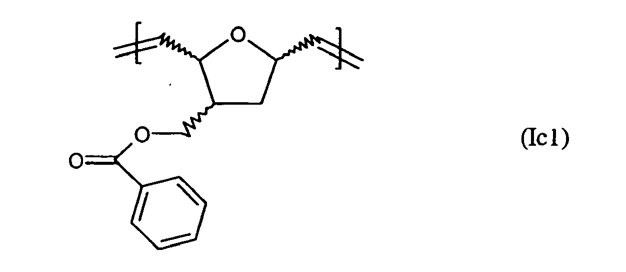

Die erfindungsgemäßen polymeren Verbindungen enthaltend die Struktureinheiten der Formeln (Ia) und (Ib) und gegebenenfalls (Ic) sind durch nachfolgend beschriebenes Verfahren zugänglich.

Es handelt sich dabei um ein Verfahren zur Herstellung von polymeren Katalysatoren, bei dem Verbindungen der Formel (IIIa) und/oder (IIIb) 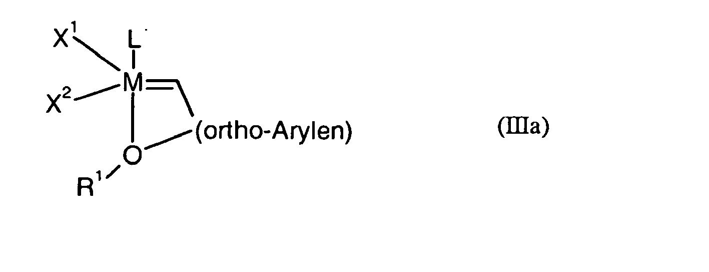 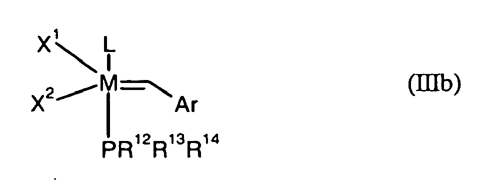 in denen
- R¹, L, X¹ und X²: die unter der Formel (Ia) genannte Bedeutung und deren Vorzugsbereiche besitzen und
ortho-Arylen für einen ortho-Phenylen oder ortho-Naphtylen-Rest, wie zum Beispiel 1,2-Naphthylen, steht, wobei die genannten Reste weiterhin mit einem, zwei, drei oder vier Resten pro Cyclus weiter substituiert sein können, die ausgewählt sind aus der Gruppe C₁-C₄-Alkyl, C₅-C₁₄-Aryl und C₁-C₄-Alkoxy und
Ar für C₅-C₁₄-Aryl steht und
- R¹², R¹³ und R¹⁴: jeweils unabhängig voneinander für C₁-C₈-Alkyl oder C₅-C₁₄-Aryl stehen

- mit mindestens einer Verbindung der Formel (IV) 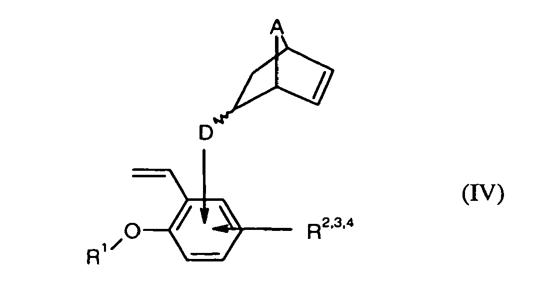 in der
   - R¹, R², R³, R⁴,: A und D die unter der Formel (Ia) genannte Bedeutung und deren Vorzugsbereiche besitzen
- und gegebenenfalls mit mindestens einer Verbindung der Formel (V) 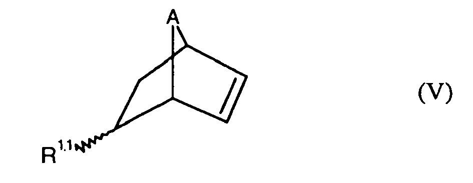 in der
   - R¹¹ und A: die unter der Formel (Ic) genannte Bedeutung und deren Vorzugsbereiche besitzen
- und gegebenenfalls mit einem oder mehreren weiteren Olefinen, die sich durch ringöffnende Metathese polymerisieren lassen
umgesetzt werden.

In Formel (IIIa) steht ortho-Arylen steht bevorzugt für ortho-Phenylen.

In Formel (IIIb) steht Aryl bevorzugt für Phenyl.

Weiterhin stehen in Formel (IIIb) R¹², R¹³ und R¹⁴ bevorzugt jeweils identisch für C₁-C₈-Alkyl oder C₅-C₁₄-Aryl, besonders bevorzugt jeweils identisch für Cyclohexyl.

Eine besonders bevorzugte Verbindung der Formel (IV) ist (7-Oxa-2-norborn-2-en-5-yl-methyl)-(2-isopropoxy-3-ethenyl-phenyl)-ether (IVa).

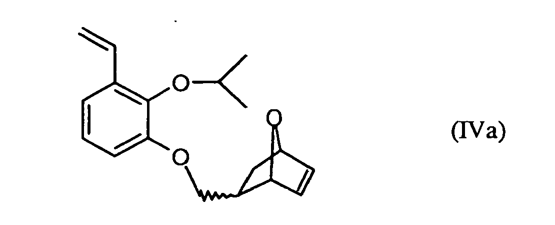

Die Verbindungen der Formel (IIIa) und (IIIb) sind literaturbekannt oder analog zu literaturbekannten Methoden herstellbar (siehe insbesondere Veldhuizen et al., *J. Am. Chem. Soc.* **2002,** *124,* 4954-4955).

Die Herstellung der Verbindungen der Formeln (IV) und (V) kann analog zu Literaturvorschriften erfolgen. Stellvertretend sei die Synthesesequenz für die Verbindung der Formel (IVa) angegeben.

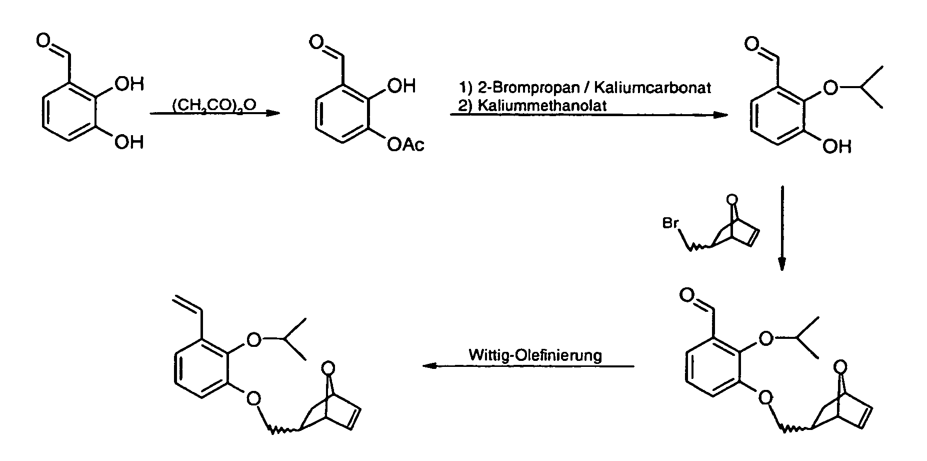

Das erfindungsgemäße Verfahren wird vorzugsweise in einem organischen Lösungsmittel durchgeführt. Als organische Lösungsmittel eignen sich beispielsweise Amide wie z.B. Dimethylformamid, N-Methylpyrrolidinon, halogenierte aliphatische oder gegebenenfalls halogenierte, aromatische Lösungsmittel mit bis zu 16 Kohlenstoffatomen wie z.B. Toluol, o-, m-, p-Xylol, Chloroform, Dichlormethan, Chlorbenzol, die isomeren Dichlorbenzole, Fluorbenzol, Nitrile wie zum Beispiel Acetonitril und Benzonitril, Sulfoxide wie Dimethylsulfoxid oder Mischungen davon.

Bevorzugte organische Lösungsmittel sind Toluol und Dichlormethan.

Die Reaktionstemperatur kann beispielsweise -30°C bis 100°C, bevorzugt 10 bis 40°C betragen.

Die Reaktionsdauer kann beispielsweise 2 Minuten bis 24 Stunden, bevorzugt 5 min bis 1 h, betragen.

Vorteilhafterweise werden bei Verwendung von Verbindungen der Formel (IIIb) weiterhin Verbindungen eingesetzt, die in der Lage sind, Phosphane abzufangen.

Vorzugsweise sind das Kupfersalze wie insbesondere CuCl₂ und CuCl, die weiterhin bevorzugt äquimolar oder im molaren Überschuss eingesetzt werden.

Je nach Wahl der molaren Verhältnisse der monomeren Verbindungen (IIIa) und/oder (IIIb), (IV) und gegebenenfalls (V) wird eine entsprechende mittlere molare Zusammensetzung in den erfindungsgemäßen polymeren Verbindungen erreicht. Die weiter oben angegebenen Vorzugsbereiche für die Verhältnisse der Struktureinheiten der Formeln (Ia), (Ib) und gegebenenfalls (Ic) gelten folglich entsprechend für die bevorzugten Bereiche der einzusetzenden Verhältnisse an monomeren Verbindungen.

Die Aufarbeitung kann beispielsweise so erfolgen, dass von gegebenenfalls vorhandenen unlöslichen Bestandteilen filtriert und das Filtrat eingeengt wird, der Rückstand anschließend mit organischem Lösungsmittel gewaschen und dann gegebenenfalls unter vermindertem Druck getrocknet wird.

Auf diese Weise können die erfindungsgemäßen polymeren Verbindungen enthaltend die Struktureinheiten der Formeln (Ia) und (Ib) und gegebenenfalls (Ic) in hohen Ausbeuten gewonnen werden. Diese erfindungsgemäßen polymeren Verbindungen eignen sich beispielsweise als Metathesekatalysatoren wie insbesondere für Ringschluss-Metathesen, Ringöffnungsmetathesen, Kreuz-Metathesen und ringöffnende Metathese-Polymerisationen.

Daher ist von der Erfindung auch ein Verfahren zur Herstellung von Olefinen durch katalytische Olefin-Metathese umfasst, das dadurch gekennzeichnet ist, dass als Katalysatoren die erfindungsgemäßen polymeren Verbindungen enthaltend die Struktureinheiten der Formeln (Ia) und (Ib) und gegebenenfalls (Ic) verwendet werden.

Dabei geht man beispielsweise so vor, dass das Edukt-Olefin gegebenenfalls in einem organischen Lösungsmittel mit den erfindungsgemäßen polymeren Verbindungen zur Reaktion bringt und auf diese Weise Katalysereaktionsmischungen erhält, die das Produkt enthalten.

Die Reaktionstemperatur kann dabei beispielsweise -30 bis 100°C betragen.

In einer bevorzugten Ausführungsform werden die erfindungsgemäßen polymeren Verbindungen aus den Katalysereaktionsmischungen abgetrennt und erneut für die Herstellung von Olefinen durch katalytische Olefin-Metathese eingesetzt. Die Vorgänge Abtrennung und erneuter Einsatz können dabei einfach oder mehrfach wiederholt werden.

In einer weiteren bevorzugten Ausführungsform des erfindungsgemäßen Verfahrens kann die Abtrennung derart erfolgen, dass zu den Katalysereaktionsmischungen soviel aliphatische Kohlenwasserstoffe, vorzugsweise solche mit 5 bis 12 Kohlenstoffatomen und/oder Diethylether zugesetzt werden, bis die polymeren Verbindungen zumindest teilweise ausfallen. Anschließend können die erfindungsgemäßen polymeren Verbindungen durch Filtration und/oder dekantieren von der Produktlösung abgetrennt werden.

Aliphatische Kohlenwasserstoffe mit 5 bis 12-Kohlenstoffatomen sind beispielsweise und bevorzugt n-Pentan und n-Hexan.

Die erfindungsgemäßen polymeren Verbindungen eignen sich insbesondere als Katalysatoren vorzugsweise als Katalysatoren in Metathesereaktionen, wie beispielsweise Kreuzmetathesen, Ringschluss-Metathesen und ringöffnenden Metathesepolymerisationen ggf. mit anschließender Kreuzmetathese.

Sie zeichnen sich durch ihre hohen Aktivitäten bei einer Vielzahl unterschiedlicher Substrate aus, so werden beispielsweise in Ringschluss-Metathesen bei geringer Katalysatorbeladung bereits in kurzer Zeit und bei tiefen Temperaturen quantitative Umsetzungen beobachtet.

Weiterhin lassen sich die erfindungsgemäßen polymeren Verbindungen leicht und mit hohen Ausbeuten aus den Katalysereaktionsmischungen abtrennen und weisen bei erneutem Einsatz nur geringen Aktivitätsverlust auf.

### Beispiele

### Beispiel 1

Herstellung von 7-Oxanorborn-2-en-5-yl-carbonsäuremethylester

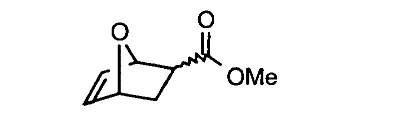

Furan und Methylacrylat wurden vor Gebrauch destilliert.

Eine Mischung von Furan (22.6 mL, 311 mmol) und Methylacrylat (20.0 mL, 222 mmol) wurde unter Stickstoff auf -20°C abgekühlt. Zu dieser Mischung wurde ebenfalls unter Stickstoff in vier Portionen AlCl₃ (8.880 g, 67 mmol) zugegeben. Die Reaktionsmischung wurde 30 min gerührt und anschließend innerhalb von 2h auf Raumtemperatur erwärmen gelassen. Die rohe Reaktionsmischung wurde mit Ethylacetat (30 mL) versetzt und gefiltert. Das Filtrat wurde mit gesättigter NH₄Cl-Lösung (50 mL) gewaschen über Magnesiumsulfat getrocknet und im Vakuum eingeengt.

Das Rohprodukt wurde durch Flash-Chromatographie (mit 50 : 50 Cyclohexan : Ethylacetat als Eluens) gereinigt, wobei man das reine Produkt 16.2 g (55% d.Th.) des reinen Produkts als 55 : 45 Mischung der exo- und endo-Isomere erhielt.

δ_{H} (200 MHz, CDCl₃, E1 = *exo*-Isomer, E2 = *endo*-Isomer): 6.40-6.46 (1H, m, H-5 E2), 6.32-6.40 (2H, m, H-5,6 E1) 6.22 (1H, dd, J 2, 15 Hz, H-6 E2), 5.12-5.20 (2H, m, H-1,4 E2), 4.98-5.08 (2H, m, H-1,4 E1), 3.72 (3H, s, CH₃ E1), 3.62 (3H, s, CH₃ E2), 3.10 (1H, quint., J 6 Hz, H-3 E1), 2.42 (1H, dd, J 3, 8 Hz, H-3 E1), 2.04-2.22 (1H, m, H-2 E1), 1.48-1.70 (2H, m, H-3 E2), 1.20-1.30 (1H, t, 6 Hz, H-2 E2).

### Beispiel 2

### Herstellung von 7-Oxanorborn-2-en-5-yl-methanol

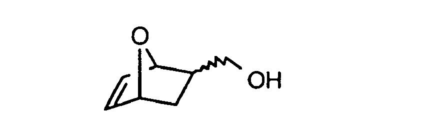

Zu einer Suspension von Lithiumaluminiumhydrid (4.376 g, 115 mmol) in wasserfreiem THF (100 mL) wurde unter Rühren und unter Stickstoff tropfenweise eine Lösung von 7-Oxanorborn-2-en-5-yl-carbonsäuremethylester (16.163 g, 105 mmol, siehe Beispiel 1) in THF (75 mL) zugegeben, so dass die Lösung leicht siedete. Die Reaktionsmischung wurde anschließend noch 12 h bei Raumtemperatur gerührt und dann durch vorsichtige Zugabe einer Eis-Wasser-Mischung gequencht. Die organische Phase wurde abgetrennt und die wässrige Phase mit Ethylacetat extrahiert (3 x 200 mL). Die vereinigten organischen Phasen wurden mit Wasser (600 mL) und gesättigter Kochsalzlösung (600 mL) gewaschen, über Magnesiumsulfat getrocknet und im Vakuum eingeengt.

Das Rohprodukt wurde durch Flash-Chromatographie gereinigt (mit einer 50 : 50-Mischung von Cyclohexan und Ethylacetat). Dabei wurden 3.7 g (32% d.Th.) des reinen Produktes erhalten.

δ_{H} (500 MHz, CDCl₃, E1 = *exo*-Isomer, E2 = *endo*-Isomer): 6.38 (1H, dd, J 1.5, 5.9 Hz, H-5 E2), 6.32 (2H, br s, H-5,6 E1), 6.28 (1H, dd, J 1.0, 5.9 Hz, H-6 E2), 5.01 (1H, d, J 3.7 Hz, H-1 E2), 4.93 (2H, m, H-1,4 E1), 4.87 (1H, s, H-4 E2), 3.75 (1H, dd, J 5.1, 10.4 Hz, HCHOH E2), 3.52-3.59 (2H, m, CH₂OH E1), 3.19 (1H, t, J 10.1 Hz, HCHOH E2), 2.44 (1H, m, H-2 E2), 1.97-2.00 (1H, m, H-3 E2), 1.76-1.81 (1H, m, H-2 E1), 1.34-1.39 (2H, m, H-3 E1), 0.70 (1H, dd, J 4.1, 11.3 Hz, H-3 E2).

### Beispiel 3

### Herstellung von 7-Oxa-norborn-2-en-5-yl-methylbromid

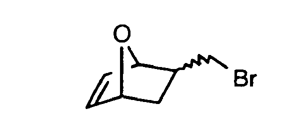

Zu einer Lösung von 7-Oxanorborn-2-en-5-yl-methanol (0.305 g, 2.50 mmol, aus Beispiel 2) in CH₂Cl₂ (12.5 mL) wurde Tetrabrommethan (1.161 g, 3.50 mmol) gegeben. Die Lösung wurde auf 0°C abgekühlt und mit Triphenylphosphin (1.836 g, 7 mmol) versetzt. Die Reaktionsmischung wurde auf Raumtemperatur erwärmen gelassen und für 12 h gerührt. Das Lösungsmittel wurde im Vakuum entfernt und der verbleibende Feststoff in Cyclohexan aufgenommen. Das Rohprodukt wurde durch Flash-Chromatographie gereinigt (mit einer 98 : 2- Mischung von Cyclohexan und Ethylacetat). Dabei wurden 0.3 g (59% d.Th.) des reinen Produktes erhalten. Das Produkt wurde unter Lichtausschluss kühl gelagert.

δ_{H} (200 MHz, CDCl₃, E1 = *exo* -Isomer, E2 = *endo*-Isomer): 6.46 (1H, dd, J 2, 6 Hz, H-5 E2), 6.35 (2H, br s, H-5,6 E1), 6.36 (1H, dd, J 2, 8 Hz, H-6 E2), 4.96-5.08 (2H, m, H-1,4 E2), 4.99 (1H, d, J 4 Hz, H-1 E1), 4.86 (1H, s, H-4 E1), 3.42-3.49 (2H, m, CH₂Br E1), 3.36 (1H, dd, J 7, 10 Hz, HCHBr E2), 3.19 (1H, t, J 10 Hz, HCHBr E2), 2.58-2.68 (1H, m, H-2 E2), 2.06-2.12 (1H, m, H-3 E2), 2.00-2.06 (1H, m, H-2 E1), 1.37-1.43 (1H, m, H-3 E1), 1.36 (1H, dt, J 4, 12 Hz, H-3 E1), 0.80 (1H, dd, J 4, 12 Hz, H-3 E2).

### Beispiel 4

### Herstellung von 2-Hydroxy-3-acetoxybenzaldehyd

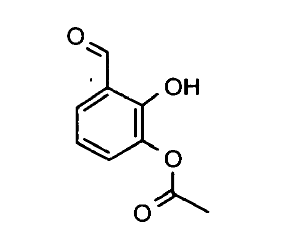

Eine Lösung von 2,3-Dihydroxybenzaldehyd (4.000 g, 28.96 mmol) und Essigsäureanhydrid (3.260 g, 32.00 mmol) in Essigsäure (40 mL) wurde unter Stickstoffatmosphäre 72 h unter Rückfluss erhitzt.

Nach Abkühlen wurde die Reaktionsmischung auf Eiswasser gegossen wobei ein weißer Feststoff ausfiel.

Nach Extraktion mit CH₂Cl₂ (2 x 100 mL) wurden die vereinigten organischen Phasen schnell mit eiskaltem Wasser (2 x 100 mL) und gesättigter Kochsalzlösung (100 mL) gewaschen. Nach Trocknen über Magnesiumsulfat wurde auf ein Volumen von ca. 70 ml eingeengt Hexan zugegeben (50 mL) und erneut im Vakuum bis zur beginnenden Kristallisation eingeengt. Es wurde belüftet und auf 0°C abgekühlt. Nach einer Stunde bei 0°C wurde der ausgefallene Niederschlag abgesaugt und im Hochvakuum getrocknet.

Es wurden 3.95 g (76 % d. Th.) 2-Hydroxy-3-acetoxybenzaldehyd als farbloser kristalliner Feststoff erhalten.

δ_{H} (500 MHz, CDCl₃): 11.12 (1H, s, CHO), 9.92 (1H, s, OH), 7.49 (1H, dd, J 1.5, 7.7 Hz), 7.32 (1H, dd, J 0.7, 7.9 Hz), 7.03 (1H, dd, J 7.7, 7.9 Hz), 2.86 (3H, s, OCOMe).

### Beispiel 5

### Herstellung von 2-Isopropoxy-3-hydroxybenzaldehyd

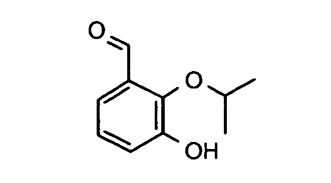

Ein 100 mL-Rundkolben wurde mit getrocknetem Molsieb 4 Å (*ca.* 1 g) und getrocknetem (130°C, 12 h) K₂CO₃ (5.520 g, 40.00 mmol) beschickt und unter Stickstoffatmossphäre mit einer Lösung von 2-Hydroxy-3-acetoxybenzaldehyd (3.600 g, 19.98 mmol, aus Beispiel 3) in trockenem DMF (50 mL) befüllt. Nach 30 minütigem Rühren wurde 2-Brompropan (13.00 mL, 138.88 mmol) über eine Kanüle zugegeben und die resultierende gelbe Lösung für 12 h auf 50°C erwärmt. Nach Abkühlen auf Raumtemperatur wurde Wasser (100 mL) zugegeben. Die zweiphasische Mischung wurde mit Diethylether (3 x 200 mL) extrahiert. Die vereinigten organischen Phasen wurden mit Wasser (5 x 100 mL) gewaschen über Magnesiumsulfat getrocknet und im Vakuum eingeengt.

Die ¹H NMR Analyse zeigte einer 92:8-Mischung von mono- und bis-alkylierten Produkten. Zur Hydrolyse der 3-Acetoxygruppe wurde der Rückstand in Methanol (20 mL) aufgenommen und solange mit einer 30%-igen Lösung von Natriummethanolat in Methanol versetzt bis die resultierende gelbe Lösung durch weiteren Zusatz nicht mehr an Farbintensität gewann.

Die methanolische Lösung wurde im Vakuum bis zur Trockene eingeengt und der verbleibende Rückstand in Wasser (40 ml) aufgenommen. Die gelbe Lösung des Phenoxids wurde mit MTBE (2 x 20 mL) extrahiert um das unerwünschte bisalkylierte Nebenprodukt zu entfernen. Anschließend wurde der wässrigen Phase Essigsäure bis zur Entfärbung zugegeben.

Anschließend wurde mit MTBE (5 x 50 mL) extrahiert, die vereinigten organischen Phasen über Magnesiumsulfat getrocknet und im Vakuum eingeengt. Der gelbe Rückstand wurde durch Säulenchromatographie gereinigt (Laufmittel CH₂Cl₂). Es wurden 2.66 g (74% d.Th.) des Produktes als farbloser Feststoff erhalten.

δ_{H} (500 MHz, CDCl₃): 10.25 (1H, s, CHO), 7.37 (1H, dd, J 1.4, 7.7 Hz), 7.20 (1H, dd, J 1.4, 7.9 Hz), 7.11 (1H, dd, 7.7, 7.9 Hz), 5.96 (1H, s, OH), 4.33 (1H, septet, J 6.1 Hz CH(CH₃)₂), 1.38 (6H, d, J 6.1 Hz, CH(CH₃)₂).

### Beispiel 6

Herstellung von (7-Oxa-2-norborn-2-en-5-yl-methyl)-(2-isopropoxy-3-formylphenyl)-ether

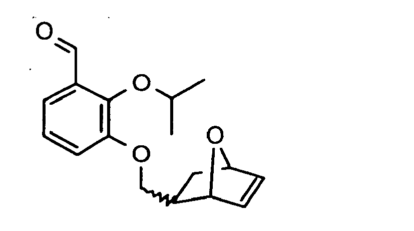

Zu einer Lösung von 2-Isopropoxy-3-hydroxybenzaldehyd (0.317 g, 1.8 mmol aus Beispiel 5) in trockenem DMF (6 mL) wurden 7-Oxa-norbom-2-en-5-yl-methylbromid (1,0 g, 5.3 mmol aus Beispiel 3) und Kaliumcarbonat (0.498 g, 3.6 mmol) zugegeben und die Reaktionsmischung bei 50 bis 60°C für 12h gerührt. Nach Abkühlen auf Raumtemperatur wurde Wasser (10 mL) zugegeben. Die resultierende zweiphasige Mischung wurde mit MTBE (3 x 20 mL) extrahiert. Die vereinigten organischen Phasen wurden mit Wasser (5 x 30 mL) und NatriumhydrogencarbonatLösung (30 mL) gewaschen, über Magnesiumsulfat getrocknet und im Vakuum eingeengt. Das Rohprodukt wurde durch Flash-Chromatographie(Laufmittel CH₂Cl₂) gereinigt. Es wurden 0.4 g (76% d.Th.) des reinen Produktes erhalten.

δ_{H} (500 MHz, CDCl₃, E1 = exo-Isomer, E2 = endo-Isomer): 10.45 (1H, s, CHO), 7.42 (1H, dd, J 1.9, 7.5 Hz, ArH), 7.02-7.14 (2H, m, ArH), 6.45 (1H, dd, J 1.6, 5.9 Hz, H-6 E2), 6.38 (2H, ddd, J 1.5, 5.9, 13.1 Hz, H-5,6 E1), 6.31 (1H, dd, J 1.3, 5.8 Hz, H-5 E2), 5.13 (2H, d, J 4.2 Hz, H-1 E2), 5.01 (2H, d, J 3.3 Hz, H-4 E2), 4.96-5.01 (2H, m, H-4,1 E1), 4.62-4.68 (1H, m, CH(CH₃)₂), 4.00-4.04 (2H, m, CH₂O E1), 3.93 (1H, dd, J 6.4, 9.1 Hz, HCHO E2), 3.54 (1H, t, J 9.1 Hz, HCHO E2), 2.76-2.81 (1H, m, H-2 E2), 2.10-2.15 (2H, m, H-3 E1 & E2), 1.51-1.54 (1H, m, H-3 E1), 1.56 (1H, dd, J 8, 12 Hz, H-2 E1), 1.36 (6H, d, J 6.1 Hz, CH(CH₃)₂), 0.86 (1H, dd, J 4.1, 11.4 Hz, H-3 E2).

### Beispiel 7

### Herstellung von (7-Oxa-2-norborn-2-en-5-yl-methyl)-(2-isopropoxy-3-ethenyl-phenyl)-ether

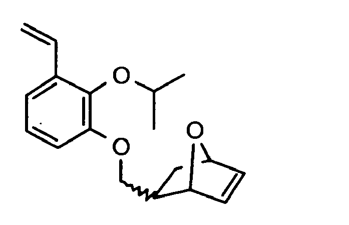

Zu einer Suspension von Methyltriphenylphosphoniumbromid (0.694 g, 1.94 mmol) in trockenem Diethylether (5 mL) wurde bei 0°C in einer Portion Kalium-*tert-*butanolat (0.218 g, 1.94 mmol) zugegeben und die Reaktionsmischung 10 min gerührt. Anschließend wurde eine Lösung von (7-Oxa-2-norbom-2-en-5-yl-methyl)-(2-isopropoxy-3-formyl-phenyl)-ether (0.280 g, 0.97 mmol aus Beispiel 6) in Diethylether (3.6 mL) zugegeben und weitere 20 min bei 0°C gerührt. Danach wurde durch Zugabe von gesättigter Ammoniumchlorid-Lösung gequencht. Die wässrige Phase wurde mit Diethylether (3 x 10 mL) extrahiert und die vereinigten organischen Phasen nach Waschen mit Wasser (30 mL) und gesättigter Kochsalz-Lösung (30 mL) über Magnesiumsulfat getrocknet und im Vakuum eingeengt.

Das Rohprodukt wurde durch Flash-Chromatographie(Laufmittel CH₂Cl₂) gereinigt. Es wurden 0.22 g (79% d.Th.) des reinen Produktes erhalten.

δ_{H} (500 MHz, CDCl₃, E1 = exo-Isomer, E2 = endo-Isomer): 7.09-7.15 (2H, m, ArH), 6.95-6.97 (1H, m, ArH), 6.73 (1H, d, J 8.0 Hz, ArCH), 6.43 (1H, dd, J 1.3, 5.8 Hz, H-6 E2), 6.36 (2H, s, H-5,6 E1), 6.27 (1H, dd, J 0.8, 5.8 Hz, H-5 E2), 5.71 (1H, d, J 17.8 Hz, HCH=CH), 5.26 (1H, dd, J 0.9, 11.1 Hz, HCH=CH), 5.15 (1H, d, J 3.7 Hz, H-1 E2), 4.97-4.99 (3H, m, H-4 E2 & H-4,1 E1), 4.45 (1H, septet, J 6.1 Hz, CH(CH₃)₂), 3.94-4.02 (2H, m, CH₂O E1), 3.91 (1H, dd, J 6.1, 9.1 Hz, HCHO E2), 3.49 (1H, t, J 9.1 Hz, HCHO E2), 2.75-2.81 (1H, m, H-2 E2), 2.08-2.13 (2H, m, H-3 E1 & E2), 1.50 (1H, dd, J 8.1, 11.5 Hz, H-3 E1), 1.56 (1H, dt, J 11.5, 3.9 Hz, H-2 E1), 1.32 (6H, d, J 6.1 Hz, CH(CH₃)₂), 0.84 (1H, dd, J 4.1, 11.4 Hz, H-3 E2).

### Beispiel 8

### Herstellung von Benzoesäure-(7-oxa-2-norborn-2-en-5-yl-methyl)-ester

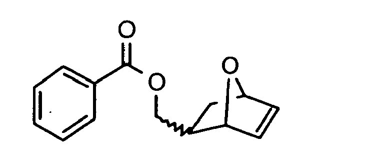

Zu einer Mischung aus 7-Oxanorborn-2-en-5-yl-methanol (0.505 g, 4.0 mmol aus Beispiel 2), 4-Dimethylaminopyridin (0.049 g, 0.4 mmol) und Triethylamin (2.2 mL, 16 mmol) in CH₂Cl₂ (8 mL) wurde bei 0°C tropfenweise eine Lösung von Benzoylchlorid (0.93 mL, 8 mmol) in CH₂Cl₂ (8 mL) zugegeben. Die Reaktionsmischung wurde bei Raumtemperatur gerührt und der Reaktionsverlauf durch Dünnschichtchromatographie verfolgt (Laufmittel 80 : 20 Ethylacetat : Cyclohexan).

Nach 2.5 h wurde die Reaktionsmischung durch Zugabe von Wasser (20 mL) gequencht. Das Produkt wurde mit CH₂Cl₂ (3 x 20 mL) extrahiert. Die vereinigten organischen Phasen wurden mit verdünnter Salzsäure, 10%-iger NaHCO₃-Lösung (60 mL), Wasser (60 mL) und konzentrierter Kochsalzlösung (60 mL) gewaschen, über Magnesiumsulfat getrocknet und im Vakuum eingeengt.

Das Rohprodukt wurde durch Flash-Chromatographie gereinigt (Laufmittel 70 : 30 bis 90 : 10 CH₂Cl₂ : Cyclohexan). Es wurden 0.68 g (74% d.Th.) des reinen Produktes erhalten.

δ_{H} (500 MHz, CDCl₃, E1 = exo-Isomer, E2 = endo-Isomer): 8.03-8.07 (2H, m, ArH), 7.55-7.57 (1H, m, ArH), 7.43-7.47 (2H, m, ArH), 6.41 (1H, dd, J 1.4, 5.8 Hz, H-5 E2), 6.33-6.36 (3H, m, H-5,6 E1 & H-6 E2), 5.06 (2H, d, J 3.7 Hz, H-1 E2), 4.98-5.01 (2H, m, H-1,4 E1), 4.92 (1H, s, H-4 E2), 4.48 (1H, dd, J 6.0, 10.8 Hz, HCHO E1), 4.27 (1H, dd, J 6.2, 11.1 Hz, HCHO E2), 3.87 (1H, t, J 10.8 Hz, HCHO E1), 3.87 (1H, t, J 11.1 Hz, HCHO E2) 2.66-2.71 (1H, m, H-2 E2), 2.03-2.14 (2H, m, H-3 E2 & H-2 E1), 1.48 (1H, dd, J 7.9, 11.5 Hz, H-3 E1), 1.41(1H, dt, J 4.0, 8.0 Hz, H-3 E1), 0.87 (1H, dd, J 4.1, 11.3 Hz, H-3 E2).

### Beispiel 9

### Herstellung eines polymeren Katalysators (Variante a)

Zu einer Lösung von (7-Oxa-2-norborn-2-en-5-yl-methyl)-(2-isopropoxy-3-ethenylphenyl)-ether (25 mg, 0.087 mmol aus Beispiel 7) und Benzoesäure-(7-oxa-2-norborn-2-en-5-yl-methyl)-ester (60 mg, 0.261 mmol aus Beispiel 8) in CH₂Cl₂ (3 mL) wurde in einem 5 ml Rundkolben unter Stickstoffatmossphäre und unter starkem Rühren *über eine Kanüle* eine Lösung von Dichloro-benzyliden-(N,N-bismesitylimidazolinyliden)-tricyclohexylphosphin-ruthenium (II) (7.4 mg, 0.0087 mmol) in CH₂Cl₂ (2 mL) *zugegeben.* Nach 10 min zeigte die ¹H NMR-Analyse der roten Reaktionslösung den kompletten Umsatz der Edukte an, erkennbar am verschwinden der olefinischen Norbornen-Signale bei 6.2-6.5 ppm. Nach Zugabe von CuCl (1 mg, 0.101 mmol) wurde die resultierende Lösung eine Stunde unter Rückfluss erhitzt, wobei eine schwach-grüne Lösung entstand.

Nach Abkühlen wurde die Reaktionslösung im Vakuum bis zur trockene eingeengt und der Rückstand in einer 1:1-Mischung aus Hexan und CH₂Cl₂ aufgenommen. Die unlöslichen Kupfersalze wurden durch Filtration über eine mit Baumwolle befüllte Pasteurpipette entfernt.

Die klare, grüne Lösung wurde im Vakuum bis zur Trockene eingeengt und der feste Rückstand sukzessive mit Hexan (10 mL) und Diethylether (10 mL) gewaschen. Nach Trockenen im Hochvakuum wurde das polymere Produkt (74.5 mg, 93% d.Th.) als schwach grüner, adhesiver Feststoff erhalten. Die Katalysatorbeladung des polymeren Produktes kann durch Integration der ¹H-NMR-Signale bei 16.67 und 7.99 ppm bestimmt werden.

δ_{H} (500 MHz, CDCl₃): 16.67 (1H, bs, Ru=CH), 7.99 (60H, bs, o-Ar-ester), 7.50 (31H, bs), 7.38 (62H, bs), 7.04 (18H, bs), 6.91 (9H bs), 6.74 (9H, bs), 5.7-5.6 (90H, bs) 5.21 (10H, bs), 4.7-3.7 (180H, m), 2.78 (20H, bs), 2.37 (61H, bs), 2.01 (50H, bs) 1.23 (60H, bs);

Hinweis: durch die überlappenden und sehr breiten Signale sind einige Integrale der Hochfeld-Signale nähert, aber nichtsdestotrotz bei verschiedenen Polymerchargen konsistent.

### Beispiele 10-24

### Allgemeine Arbeitsvorschrift für die Durchführung von Metathese-Katalysen unter Verwendung des polymeren Katalysators aus Beispiel 9

Zu einer Lösung des polymeren Katalysators aus Beispiel 9 (1.2 x 10⁻³ mmol) in CH₂Cl₂ (1 mL) wurde unter Stickstoffatmosphäre bei Raumtemperatur das Substrat (Verbindungen 14 bis 21) (0.12 mmol) in CH₂Cl₂ (1.6 mL) zugegeben. Die resultierende schwach grüne Lösung wurde so lange gerührt, das Substrat laut ¹H-NMR-Spektrum oder Dünnschichtchromatographie quantitativ umgesetzt war. Nach der Reaktion kann der Katalysator aus der Katalysereaktionsmischung durch Zugabe von kaltem Diethylether (7 mL) als grünes adhesives Material abgetrennt werden. Alternativ dazu führt der Zusatz von kaltem Hexan oder einem Diethylether-Hexan-Gemisch zur Ausfällung des Katalysators als grünen Feststoff. Die Produkte (Verbindungen 22 bis 29) können anschließend durch Filtration und Entfernen des Lösungsmittels gewonnen werden.

Die Katalyseergebnisse sind in den Tabellen 1 und 2 zusammengefasst, wobei Tabelle die Rezyklierbarkeit des Katalysators darstellt.

**Tabelle 1: Aktivität des polymeren Katalysators aus Beispiel 9 in Metathesereaktionen.**

| **Beispiel** | **Substrat** | **Produkt / (Reaztionszeit)** | **Umsatz (%)** |
|---|---|---|---|
| 10 | 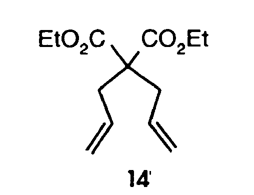 | 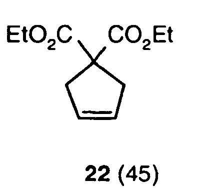 | >98 |
| 11 | 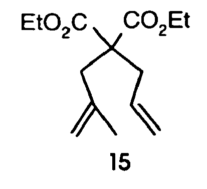 | 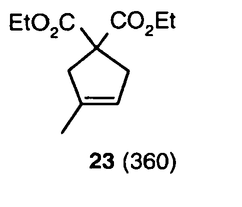 | >98 |
| 12 | 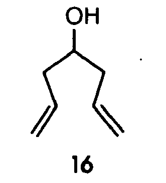 | 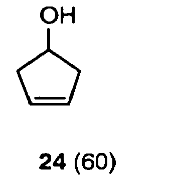 | >98 |
| 13 | 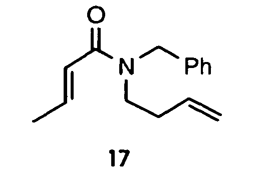 | 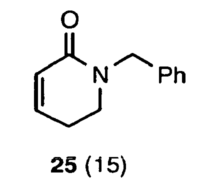 | >98 |
| 14 | 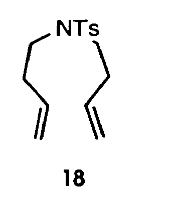 | 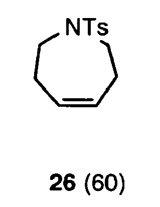 | >98 |
| 15 | 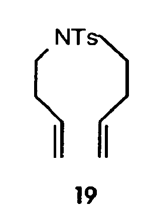 | 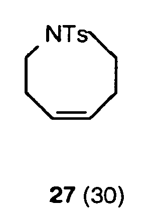 | >98 |
| 16 | 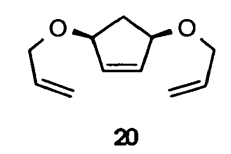 | 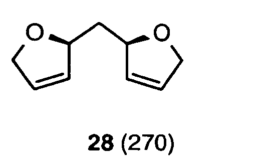 | >98 |
| 17 | 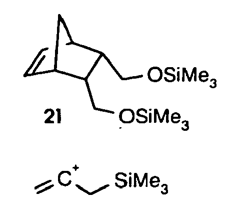 | 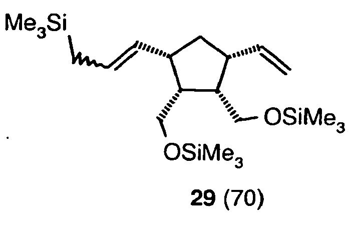 | >98 |

**Tabelle 2: Recyclierbarkeit des polymeren Katalysators aus Beispiel 9 in der Ringschlussmetathese von Toluolsulfonyl-N,N-diallylamid**

| Beispiel | Zyklus | Zeit (min) | Umsatz (%) |
|---|---|---|---|
| 18 | | | |
| | 1 | 60 | >98 |
| 19 | 2 | 60 | >98 |
| 20 | 3 | 60 | >98 |
| 21 | 4 | 60 | >98 |
| 22 | 5 | 60 | >98 |
| 23 | 6 | 120 | >98 |
| 24 | 7 | 240 | >98 |

## Patentansprüche

1. Polymere Verbindungen enthaltend zumindest
• Struktureinheiten der Formel (Ia), 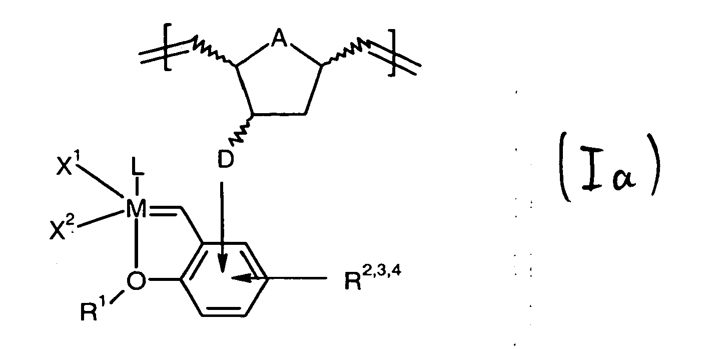 worin
M für ein Übergangsmetall der 8. Nebengruppe des Periodensystems steht,
X¹ und X² gleich oder verschieden sind und für Chlor, Brom oder Iod stehen,
L für einen N-heterocyclischen Carbenliganden der Formel (II) steht 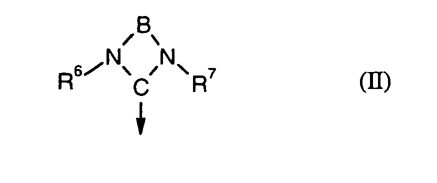 wobei die Pfeilrichtung die Bindung zu M symbolisieren soll und in der
B für einen 1,2-Ethandiyl- oder 1,2-Ethendiyl-Rest steht, der gegebenenfalls einfach oder zweifach durch C₁-C₄-Alkyl, C₆-C₁₅-Arylalkyl oder C₅-C₁₄-Aryl weiter substituiert ist und
R⁶ und R⁷ jeweils unabhängig voneinander für C₁-C₂₀-Alkyl oder C₅-C₂₄-Aryl stehen,
R¹ für cyclisches, geradkettiges oder verzweigtes C₁-C₂₀-Alkyl oder für C₅-C₂₄-Aryl steht und
R², R³ und R⁴ jeweils unabhängig voneinander für Wasserstoff, C₁-C₂₀-Alkyl, C₅-C₂₄-Aryl; Halogen, C₁-C₄-Fluoralkyl, C₁-C₄-Alkoxy, C₅-C₁₄-Aryloxy, (C₁-C₈-Alkyl)OCO-, (C₁-C₈-Alkyl)CO₂-, (C₅-C₁₄-Aryl)OCO- oder (C₅-C₁₄-Aryl)CO₂-stehen und/oder
jeweils zwei zueinander ortho-ständige Reste aus der Gruppe R², R³ und R⁴ Teil eines cyclischen Systems sind, der aus einem Kohlenstoffgerüst mit 5 bis 22 Kohlenstoffatomen besteht, wobei ein oder mehrere Kohlenstoffatome cyclischen Systems durch Heteroatome aus der Gruppe Schwefel, Sauerstoff oder Stickstoff ersetzt sein können und wobei das cyclische System weiterhin gegebenenfalls einfach oder mehrfach durch Reste substituiert ist, die ausgewählt sind aus der Gruppe Halogen, C₁-C₄-Fluoralkyl, (C₁-C₄-Alkyl)OCO-, (C₁-C₈-Alkyl)CO₂-, (C₆-C₁₀-Aryl)OCO- oder (C₅-C₁₄-Aryl)CO₂- und
A für Sauerstoff, Schwefel, Sulfoxyl, Sulfonyl oder CR⁸R⁹ steht, wobei R⁸ und R⁹ jeweils unabhängig voneinander für Wasserstoff oder C₁-C₄-Alkyl stehen und
D für C₁-C₈-Alkylen, [(C₁-C₈-Alkylen)-O-]ₙ mit n = 1 bis 12, (C₁-C₈-Alkylen)CO₂-, (C₁ -C₈-Alkylen)-OCO-(C₁-C₈-Alkylen), (C₁-C₈-Alkylen)CO₂-(C₁-C₈-Alkylen), (C₁-C₈-Alkylen)CONR¹⁰-, (C₁-C₈-Alkylen)NR¹⁰CO-, (C₁-C₈-Alkylen)CONR¹⁰-(C₁-C₈-Alkylen) oder (C₁-C₈-Alkylen)-NR¹⁰CO-(C₁-C₈-Alkylen) steht, wobei R¹⁰ für Wasserstoff oder C₁-C₄-Alkyl steht
• und Struktureinheiten der Formel (Ib) 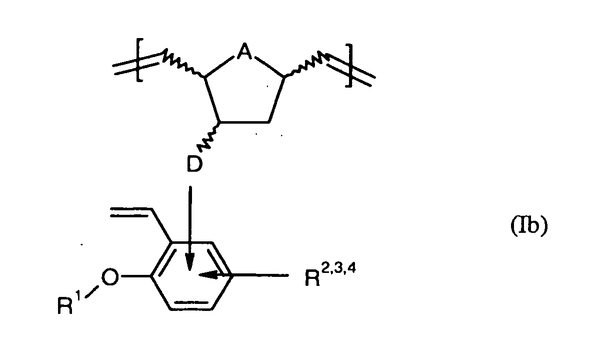 wobei A, D, R¹, R², R³ und R⁴ jeweils unabhängig die gleichen Bedeutungen besitzen und die gleichen Bedingungen erfüllen, die unter der Formel (Ia) genannt wurden.
• und gegebenenfalls Struktureinheiten der Formel (Ic) 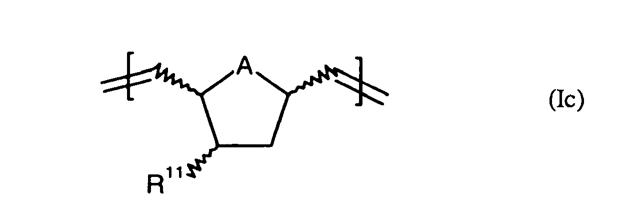 in der
A die gleichen Bedeutung besitzt und die gleichen Bedingungen erfüllt, die unter der Formel (Ia) in Anspruch 1 genannt wurden und
R¹¹ für C₁-C₈-Alkyl, [(C₁-C₈-Alkylen)-O-]ₙ-(C₁-C₈-Alkyl) mit n = 1 bis 12, (C₁-C₈-Alkylen)CO₂-(C₁-C₈-Alkyl), (C₁-C₈-Alkylen)-OCO-(C₁-C₈-Alkyl), (C₁-C₈-Alkylen)-OCO-(C₅-C₁₄-Aryl), (C₁-C₈-Alkylen)CO₂-(C₅-C₁₄-Aryl), (C₁-C₈-Alkylen)CONR¹⁰-(C₁-C₈-Alkyl), (C₁-C₈-Alkylen)NR¹⁰CO-(C₁-C₈-Alkyl), (C₁-C₈-Alkylen)-CONR¹⁰-(C₅-C₁₄-Aryl) oder (C₁-C₈-Alkylen)NR¹⁰CO-(C₅-C₁₄-Aryl) steht, wobei R¹⁰ für Wasserstoff oder C₁-C₄-Alkyl steht,
wobei der Polymerisationsgrad (Zahlenmittel) der Struktureinheiten der Formel (Ia), (Ib) und gegebenenfalls (Ic) 6 bis 2000 beträgt.

2. Polymere Verbindungen gemäß Anspruch 1, **dadurch gekennzeichnet, dass** sie weiterhin Struktureinheiten enthalten, die sich von Olefinen ableiten, die für Ring-öffnende Metathese-Polymerisation geeignet sind.

3. Polymere Verbindungen gemäß einem oder mehreren der Ansprüche 1 bis 2, **dadurch gekennzeichnet, dass** in den Struktureinheiten der Formeln (Ia), (Ib) und gegebenenfalls (Ic) A, D, M, L, X¹ und X² ebenso wie R¹, R², R³, R⁴ und gegebenenfalls vorhandene Reste R¹¹ jeweils identisch sind.

4. Polymere Verbindungen gemäß einem oder mehreren der Ansprüche 1 bis 3, **dadurch gekennzeichnet, dass** der durchschnittliche Gewichtsanteil an den Struktureinheiten der Formel (Ia) und der Formel (Ib) und den gegebenenfalls vorhandenen Struktureinheiten der Formel (Ic) 80 % oder mehr beträgt.

5. Polymere Verbindungen gemäß einem oder mehreren der Ansprüche 1 bis 4, **dadurch gekennzeichnet, dass** das Verhältnis von Struktureinheiten der Formel (Ia) zu Struktureinheiten der Formel (Ib) 1:2 bis 1:500 beträgt.

6. Polymere Verbindungen gemäß einem oder mehreren der Ansprüche 1 bis 4, **dadurch gekennzeichnet, dass** das Verhältnis von Struktureinheiten der Formel (Ia) zu Struktureinheiten der Formel (Ic) 10:1 bis 1:200 beträgt.

7. Polymere Verbindungen gemäß einem oder mehreren der Ansprüche 1 bis 6, **dadurch gekennzeichnet, dass** in den Struktureinheiten der Formeln (Ia) und (Ib) D über die ortho-Stellung zum Olefin bzw. der Ylideneinheit gebunden ist.

8. Polymere Verbindungen gemäß einem oder mehreren der Ansprüche 1 bis 7, **dadurch gekennzeichnet, dass** M in Formel (Ia) für Ruthenium oder Osmium steht.

9. Polymere Verbindungen gemäß einem oder mehreren der Ansprüche 1 bis 8, **dadurch gekennzeichnet, dass** in Formel (II) B für 1,2-Ethandiyl- oder 1,2-Ethendiyl steht.

10. Polymere Verbindungen gemäß einem oder mehreren der Ansprüche 1 bis 9, **dadurch gekennzeichnet, dass** in Formel (II) R⁶ und R⁷ identisch für einen primären C₅-C₂₀-Alkyl-Rest steht, wobei die Auflage gilt dass das an das Stickstoffatom gebundene Kohlenstoffatom einen tertiären Alkylrest trägt, oder für einen sekundären C₃-C₂₀-Alkyl-Rest, einen tertiären C₄-C₂₀-Alkyl-Rest oder für einen Phenylrest steht, der einfach oder mehrfach zumindest jedoch in einer ortho-Position durch C₁-C₄-Alkylreste weiter substituiert ist.

11. Verwendung von polymeren Verbindungen gemäß einem oder mehreren der Ansprüche 1 bis 10 als Katalysatoren.

12. Verfahren zur Herstellung von Olefinen durch katalytische Olefin-Metathese, **dadurch gekennzeichnet, dass** als Katalysatoren polymere Verbindungen gemäß einem oder mehreren der Ansprüche 1 bis 10 verwendet werden.

13. Verfahren gemäß Anspruch 12, **dadurch gekennzeichnet, dass** die Katalysatoren aus den Katalysereaktionsmischungen abgetrennt und erneut für die Herstellung von Olefinen durch katalytische Olefin-Metathese eingesetzt werden.

## Claims

1. Polymeric compounds containing at least
• structural units of the formula (Ia), 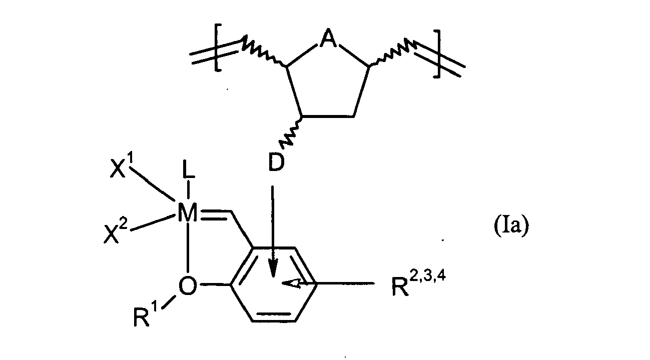 where
M is a transition metal of the 8^{th} transition group of the Periodic Table,
X¹ and X² are the same or different and are each chlorine, bromine or iodine,
L is an N-heterocyclic carbene ligand of the formula (II) 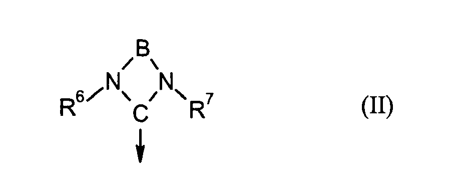 where the direction of the arrow is intended to represent the bond to M
and where
B is a 1,2-ethanediyl or 1,2-ethenediyl radical which is optionally mono- or disubstituted by C₁-C₄-alkyl, C₆-C₁₅-arylalkyl or C₅-C₁₄-aryl and
R⁶ and R⁷ are each independently C₁-C₂₀-alkyl or C₅-C₂₄-aryl,
R¹ is cyclic, straight-chain or branched C₁-C₂₀-alkyl or C₅-C₂₄-aryl and
R2, R³ and R⁴ are each independently hydrogen, C₁-C₂₀-alkyl, C₅-C₂₄-aryl, halogen, C₁-C₄-fluoroalkyl, C₁-C₄-alkoxy, C₅-C₁₄-aryloxy, (C₁-C₈-alkyl)OCO-, (C₁-C₈-alkyl)CO₂-, (C₅-C₁₄-aryl)OCO- or (C₅-C₁₄-aryl)CO₂- and/or
in each case two radicals in an ortho-arrangement to one another from the group of R², R³ and R⁴ are part of a cyclic system which consists of a carbon framework having 5 to 22 carbon atoms, one or more carbon atoms of the cyclic system optionally being replaced by heteroatoms from the group of sulphur, oxygen or nitrogen, and the cyclic system also being optionally mono- or polysubstituted by radicals selected from the group of halogen, C₁-C₄-fluoroalkyl, (C₁-C₄-alkyl)OCO-, (C₁-C₈-alkyl)CO₂-, (C₆-C₁₀-aryl)OCO- or (C₅-C₁₄-aryl)CO₂- and
A is oxygen, sulphur, sulphoxyl, sulphonyl or CR⁸R⁹ where R⁸ and R⁹ are each independently hydrogen or C₁-C₄-alkyl and
D is C₁-C₈-alkylene, [(C₁-C₈-alkylene)-O-]ₙ where n = 1 to 12, (C₁-C₈-alkylene)CO₂-, (C₁-C₈-alkylene)-OCO-(C₁-C₈-alkylene), (C₁-C₈-alkylene)CO₂-(C₁-C₈-alkylene), (C₁-C₈-alkylene)CONR¹⁰-, (C₁-C₈-alkylene)NR¹⁰CO-, (C₁-C₈-alkylene)CONR¹⁰-(C₁-C₈-alkylene) or (C₁-C₈-alkylene)-NR¹⁰CO-(C₁-C₈-alkylene) where R¹⁰ is hydrogen or C₁-C₄-alkyl
• and structural units of the formula (Ib) 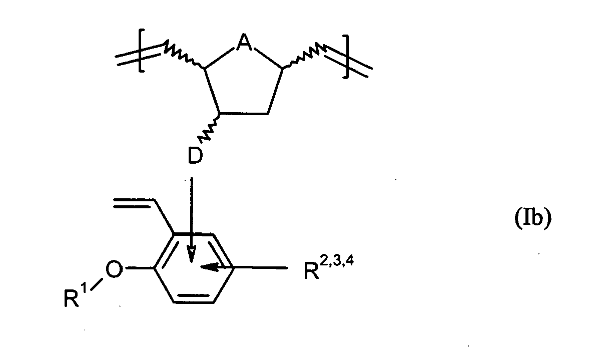
where A, D, R¹, R², R³ and R⁴ each independently have the same definitions and fulfil the same conditions as specified under the formula (Ia).
• and optionally structural units of the formula (Ic) 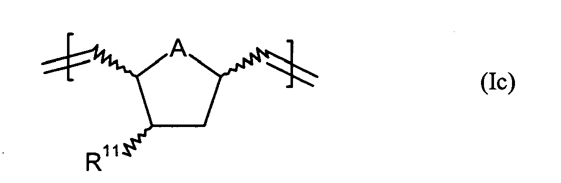 where
A has the same definition and fulfils the same conditions as specified under the formula (Ia) in Claim 1 and
R¹¹ is C₁-C₈-alkyl, [(C₁-C₈-alkylene)-O-]ₙ-(C₁-C₈-alkyl) where n = 1 to 12, (C₁-C₈-alkylene)CO₂-(C₁-C₈-alkyl), (C₁-C₈-alkylene)-OCO-(C₁-C₈-alkyl), (C₁-C₈-alkylene)-OCO-(C₅-C₁₄-aryl), (C₁-C₈-alkylene)CO₂-(C₅-C₁₄-aryl), (C₁-C₈-alkylene)CONR¹⁰-(C₁-C₈-alkyl), (C₁-C₈-alkylene)NR¹⁰CO-(C₁-C₈-alkyl), (C₁-C₈-alkylene)CONR¹⁰-(C₅-C₁₄-aryl) or (C₁-C₈-alkylene)NR¹⁰CO-(C₅-C₁₄-aryl) where R¹⁰ is hydrogen or C₁-C₄-alkyl,
the degree of polymerization (numerical average) of the structural units of the formula (Ia), (Ib) and, if appropriate, (Ic) being 6 to 2000.

2. Polymeric compounds according to Claim 1 and 2, **characterized in that** they also contain structural units which are derived from olefins which are suitable for ring-opening metathesis polymerization.

3. Polymeric compounds according to one or more of Claims 1 to 2, **characterized in that** A, D, M, L, X¹ and X² and likewise R¹, R², R³, R⁴ and any R¹¹ radicals present in the structural units of the formulae (Ia), (Ib) and, if present, (Ic) are each identical.

4. Polymeric compounds according to one or more of Claims 1 to 3, **characterized in that** the average proportion by weight of structural units of the formula (Ia) and of the formula (Ib) and any structural units of the formula (Ic) present is 80% or more.

5. Polymeric compounds according to one or more of Claims 1 to 4, **characterized in that** the ratio of structural units of the formula (Ia) to structural units of the formula (Ib) is 1:2 to 1:500.

6. Polymeric compounds according to one or more of Claims 1 to 4, **characterized in that** the ratio of structural units of the formula (Ia) to structural units of the formula (Ic) is 10:1 to 1:200.

7. Polymeric compounds according to one or more of Claims 1 to 6, **characterized in that** D in the structural units of the formulae (Ia) and (Ib) is bonded via the ortho-position to the olefin or the ylidene unit.

8. Polymeric compounds according to one or more of Claims 1 to 7, **characterized in that** M in formula (Ia) is ruthenium or osmium.

9. Polymeric compounds according to one or more of Claims 1 to 8, **characterized in that** B in formula (II) is 1,2-ethanediyl or 1,2-ethenediyl.

10. Polymeric compounds according to one or more of Claims 1 to 9, **characterized in that** R⁶ and R⁷ in formula (II) are identical and are each a primary C₅-C₂₀-alkyl radical, with the proviso that the carbon atom bonded to the nitrogen atom bears a tertiary alkyl radical, or are each a secondary C₃-C₂₀-alkyl radical, a tertiary C₄-C₂₀-alkyl radical or a phenyl radical which is further mono- or polysubstituted, although at least in an ortho-position, by C₁-C₄-alkyl radicals.

11. Use of polymeric compounds according to one or more of Claims 1 to 10 as catalysts.

12. Process for preparing olefins by catalytic olefin metathesis, **characterized in that** the catalysts used are polymeric compounds according to one or more of Claims 1 to 10.

13. Process according to Claim 12, **characterized in that** the catalysts are removed from the catalytic reaction mixtures and reused for the preparation of olefins by catalytic olefin metathesis.

## Revendications

1. Composés polymère renfermant au moins
• des motifs structuraux de formule (Ia), 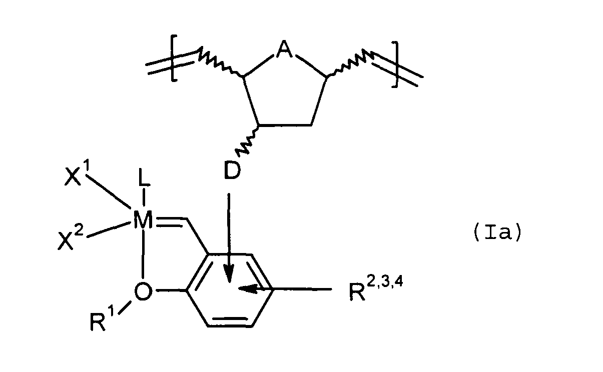 dans laquelle
M représente un métal de transition du 8^{ème} groupe secondaire du système périodique,
X¹ et X² sont identiques ou différents et représentent un atome de chlore, un atome de brome ou un atome d'iode,
L représente un ligand carbène N-hétérocyclique de formule (II) 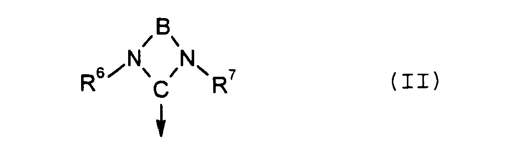 dans laquelle la direction de la flèche est destinée à symboliser la liaison à M, et dans laquelle
B représente un radical 1,2-étanediyle ou un radical 1,2-éthènediyle, qui est en outre éventuellement mono- ou di-substitué par un groupe alkyle en C₁-C₄, un groupe arylalkyle en C₆-C₁₅ ou un groupe alkyle en C₅-C₁₄, et
R⁶ et R⁷ représentent chacun, indépendamment l'un de l'autre, un groupe alkyle en C₁-C₂₀ ou un groupe aryle en C₅-C₂₄,
R¹ représente un groupe alkyle en C₁-C₂₀ cyclique, linéaire ou ramifié ou un groupe aryle en C₅-C₂₄, et
R², R³, et R⁴ représentent chacun, indépendamment les uns des autres, un atome d'hydrogène, un groupe alkyle en C₁-C₂₀, un groupe aryle en C₅-C₂₄, un atome d'halogène, un groupe fluoroalkyle en C₁-C₄, un groupe alcoxy en C₁-C₄, un groupe aryloxy en C₅-C₁₄, un groupe (C₁-C₈-alkyl)OCO-, un groupe (C₁-C₈-alkyl)CO₂-, un groupe (C₅-C₁₄-aryl)CO₂-, et/ou
dans chaque cas, deux radicaux en position ortho l'un par rapport à l'autre, parmi le groupe constitué de R², de R³ et de R⁴, font partie d'un système cyclique qui est constitué d'un squelette carboné renfermant de 5 à 22 atomes de carbone, où un ou plusieurs atomes de carbone peuvent être remplacés par des hétéroatomes parmi le groupe constitué d'un atome de soufre, d'un atome d'oxygène ou d'un atome d'azote, et où le système cyclique est en outre éventuellement mono- ou poly-substitué par des radicaux qui sont choisis parmi le groupe constitué d'un atome d'halogène, d'un groupe fluoroalkyle en C₁-C₄ , d'un groupe (C₁-C₄-alkyl)OCO-, d'un groupe (C₁-C₈-alkyl)CO₂-, d'un groupe (C₆-C₁₀-aryl)OCO- ou d'un groupe (C₅-C₁₄-aryl) CO₂-, et
A représente un atome d'oxygène, un atome de soufre, un groupe sulfoxyle, un groupe sulfonyle ou un groupe CR⁸R⁹, dans lequel R⁸ et R⁹ représentent chacun, indépendamment l'un de l'autre, un atome d'hydrogène ou un groupe en C₁-C₄, et
D représente un groupe alkylène en C₁-C₈, un groupe [(C₁-C₈-alkylène)-O-]ₙ dans lequel n vaut de 1 à 12, un groupe (C₁-C₈-alkylène) CO₂-, un groupe (C₁-C₈-alkylène) -OCO- (C₁-C₈-alkylène), un groupe (C₁-C₈-alkylène) CO₂-(C₁-C₈-alkylène), un groupe (C₁-C₈-alkylène) CONR¹⁰-, un groupe (C₁-C₈-alkylène)NR¹⁰CO-, un groupe (C₁-C₈-alkylène) CONR¹⁰- (C₁-C₈-alkylène) ou un groupe (C₁-C₈-alkylène) -NR¹⁰CO- (C₁-C₈-alkylène), dans lesquels R¹⁰ représente un atome d'hydrogène ou un groupe alkyle en C₁-C₄,
• et des motifs structuraux de formule (Ib) 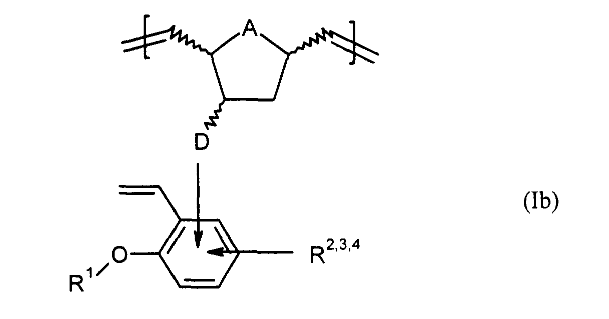 dans laquelle A, D, R¹, R², R³ et R⁴ présentent chacun indépendamment les mêmes significations et satisfont aux mêmes conditions qui ont été mentionnées pour la formule (Ia),
• et éventuellement des motifs structuraux de formule (Ic) 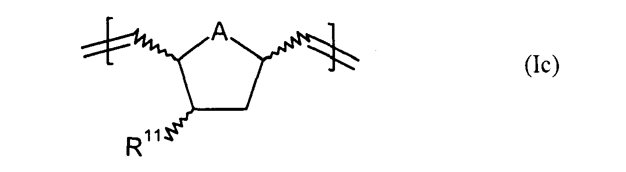
A présente la même signification et satisfait aux mêmes conditions qui ont été mentionnées pour la formule (Ia) dans la revendication 1, et
R¹¹ représente un groupe alkyle en C₁-C₈, un groupe [(C₁-C₈-alkylène)-O-]ₙ-(C₁-C₈-alkyle) dans lequel n vaut de 1 à 12, un groupe (C₁-C₈-alkylène) CO₂- (C₁-C₈-alkyle), un groupe (C₁-C₈-alkylène) -OCO- (C₁-C₈-alkyle), un groupe (C₁-C₈-alkylène) -OCO- (C₅-C₁₄-aryle) un groupe (C₁-C₈-alkylène) CO₂- (C₅-C₁₄-aryle), un groupe (C₁-C₈-alkylène) CONR¹⁰- (C₁-C₈-alkyle), un groupe (C₁-C₈-alkylène)NR¹⁰CO-(C₁-C₈-alkyle), un groupe (C₁-C₈-alkylène) -CONR¹⁰- (C₅-C₁₄-aryle) ou un groupe (C₁-C₈-alkylène)NR¹⁰CO-(C₅-C₁₄-aryle), dans lesquels R¹⁰ représente un atome d'hydrogène ou un groupe alkyle en C₁-C₄,
où le degré de polymérisation (moyenne en nombre) des motifs structuraux de formules (Ia), (Ib) et éventuellement (Ic) est de 6 à 2000.

2. Composés polymère selon la revendication 1, **caractérisés en ce qu'**ils renferment en outre des motifs structuraux qui sont dérivés d'oléfines qui sont appropriés pour une polymérisation à métathèse avec ouverture de cycle.

3. Composés polymère selon l'une ou plusieurs des revendications 1 à 2, **caractérisés en ce que** dans les motifs structuraux de formules (Ia), (Ib) et éventuellement (Ic), A, D, M, L, X¹ et X² ainsi que R¹, R², R³, R⁴ et les radicaux R¹¹ éventuellement présents sont, dans chaque cas, identiques.

4. Composés polymère selon l'une ou plusieurs des revendications 1 à 3, **caractérisés en ce que** la proportion pondérale moyenne des motifs structuraux de formule (Ia) et de formule (Ib) et des motifs structuraux de formule (Ic) éventuellement présents est de 80 % ou plus.

5. Composés polymère selon l'une ou plusieurs des revendications 1 à 4, **caractérisés en ce que** le rapport entre les motifs structuraux de formule (Ia) et les motifs structuraux de formule (Ib) est de 1 : 2 à 1 : 500.

6. Composés polymère selon l'une ou plusieurs des revendications 1 à 4, **caractérisés en ce que** le rapport entre les motifs structuraux de formule (Ia) et les motifs structuraux de formule (Ic) est de 10 : 1 à 1 : 200.

7. Composés polymère selon l'une ou plusieurs des revendications 1 à 6, **caractérisés en ce que** dans les motifs structuraux de formule (Ia) et (Ib), D est lié à l'oléfine ou au motif ylidène par l'intermédiaire de la position ortho.

8. Composés polymère selon l'une ou plusieurs des revendications 1 à 7, **caractérisés en ce que** M, dans la formule (Ia), représente le ruthénium ou l'osmium.

9. Composés polymère selon l'une ou plusieurs des revendications 1 à 8, **caractérisés en ce que** dans la formule (II), B représente un groupe 1,2-éthanediyle ou un groupe 1,2-éthènediyle.

10. Composés polymère selon l'une ou plusieurs des revendications 1 à 9, **caractérisés en ce que** dans la formule (II), R⁶ et R⁷ sont identiques et représentent un radical alkyle en C₅-C₂₀ primaire, à condition que l'atome de carbone lié à l'atome d'azote porte un radical alkyle tertiaire, ou représentent un radical alkyle en C₃-C₂₀ secondaire, un radical alkyle en C₄-C₂₀ tertiaire ou un radical phényle, qui est en outre mono- ou poly-substitué par des radicaux alkyle en C₁-C₄, mais au moins en une position ortho.

11. Utilisation de composés polymère selon l'une ou plusieurs des revendications 1 à 10 en tant que catalyseurs.

12. Procédé de préparation d'oléfines par métathèse oléfinique catalytique, **caractérisé en ce que**, en tant que catalyseurs, on utilise des composés polymère selon l'une ou plusieurs des revendications 1 à 10.

13. Procédé selon la revendication 12, **caractérisé en ce que** les catalyseurs sont séparés des mélanges réactionnels catalytiques et de nouveau utilisés pour la préparation d'oléfines par métathèse oléfinique catalytique.
